# EUROPEAN PATENT SPECIFICATION

(11) **EP 0 501 694 B1**
(45) Date of publication and mention of the grant of the patent: **20.12.1995**
(21) Application number: 92301468.2
(22) Date of filing: 21.02.1992
(51) Int. Cl.: G02F 1/1343

(54) **Method of manufacturing a colour filter and colour electrooptical device**
Verfahren zur Herstellung eines Farbfilters und farbelektrooptische Vorrichtung
Méthode de fabrication d'un filtre coloré et dispositif électro-optique en couleurs

(30) Priority: 26.02.1991 JP 31071/91
(43) Date of publication of application: 02.09.1992
(73) Proprietor: SEIKO INSTRUMENTS INC., Tokyo 136 (JP)
(72) Inventor: Suginoya, Mitsuru, Seiko Instruments Inc., Koto-ku, Tokyo (JP); Kamamori, Hitoshi, Seiko Instruments Inc., Koto-ku, Tokyo (JP); Fukuchi, Takakazu, Seiko Instruments Inc., Koto-ku, Tokyo (JP)
(74) Representative: Sturt, Clifford Mark

(56) References cited:
- EP-A- 0 385 475
- US-A- 3 962 988
- DATABASE WPIL Week 8848, Derwent Publications Ltd., London, GB; AN 88241065 & JPA 63252308
- PATENT ABSTRACTS OF JAPAN vol. 14, no. 487 (P-1121)23 October 1990 & JP A 2198419
- DATABASE WPIL Week 8639 Derwent Publications Ltd., London, GB; AN 86255587 & JP A 61183809

## Description

The present invention relates to a method of manufacturing a colour filter and a colour electrooptical device such as, for example, a colour liquid crystal display device having a transparent electrode over a colour filter formed on a transparent substrate.

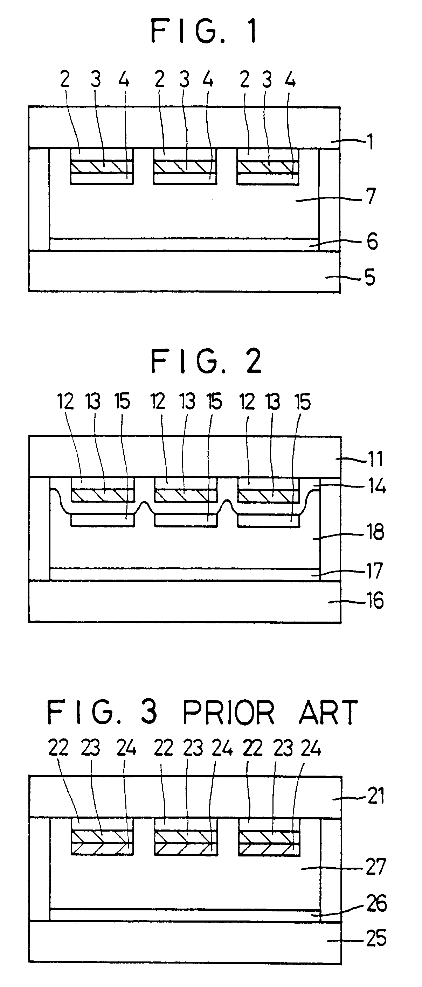

Fig. 3 is a cross section showing a colour liquid crystal display device of the prior art. Reference numeral 21 designates a substrate made of glass; numeral 22 a transparent electrode made of an indium-tin oxide (as will be referred to as "ITO"); and numeral 23 a colour filter made of an organic polymer and a colouring material which is prepared by dyeing, printing, electrodeposition or the like. If the dyeing method or the printing method is used, then one can dispense with the ITO of the electrode 22. Numeral 24 designates a second transparent electrode which is made of an ITO and formed to have its pattern registered with the colour filter. This second transparent electrode 24 is prepared in the prior art by a sputtering method.

Numeral 25 designates an opposed substrate which is formed thereover with a transparent electrode 26 of an ITO. The opposed substrate 25 is opposed to the substrate 21 to sandwich a liquid crystal 27 therebetween to constitute a multi-colour liquid crystal display device. This liquid crystal display device can use the transparent electrode 24 over the colour filter as a driving electrode for applying a voltage to the liquid crystal. By apply the driving voltage directly to the liquid crystal there is no voltage loss, which has been caused heretofore by applying the voltage through the colour filter. Thus the liquid crystal display device is particularly useful as it can be driven at a low voltage.

If, however, the transparent electrode (24) over the colour filter is formed by sputtering the substrate temperature when filming cannot be raised to a relatively high level due to heat resistance which is a consequence of the colour filter being made of an organic polymer. Thus, the process has to be accomplished at a lower temperature than normal when filming over an inorganic substrate of glass or the like. This lower temperature leads to deterioration of the contact between the formed film and the substrate. Still worse, it frequently occurs that the resistivity of the film does not drop. As a result, separation or other defects are likely to occur, and a sufficiently low resistance cannot be obtained with a desired film thickness.

Generally, an organic polymer and an inorganic substrate such as the ITO are highly different in thermal deformation so that when heated displacement will easily occur at their interface if they are merely contiguous. When the film is formed by sputtering, the energy of the particles impinging on the colour filter is relatively low so that the bonds between the particles of the film and the colour filter are weaker than the thermal stresses at the interface. Thus, defects such as separation, cracking or the like seem to occur.

If, on the other hand, the organic polymer used is heated and filmed at the limit of heat resistance so as to improve contact, then the stresses due to the thermal deformation of the colour filter is easily concentrated at the film interface which causes defects such as cracking.

Hitherto, in order to avoid this defect, an overcoat layer having a buffering action may be sandwiched between the colour filter and the transparent electrode. However, this causes considerably difficulty after the transparent electrode has been filmed in satisfying the resistance to the heating treatment and the reliability of the device when used.

On the other hand, in order to improve the contact with the organic polymer, the transparent electrode is formed by ion plating, in which evaporation particles are ionized to make a film by a plasma beam, as disclosed in Japanese Patent Publication No. 198419/1990.

This ion plating method remarkably improves the contact of the colour film or the like to the organic polymer, but is difficult to provide adequate cover so as to reduce the resistivity and to provide a thin film transparent electrode having a low resistance.

Investigations have thus been made into filming techniques for forming such a film over a colour film made from an organic polymer which has good contact characteristics and can achieve a low resistivity. As a result, it was established that a transparent electrode filmed by a high-frequency ion plating method, in which a substance having evaporated from an evaporation source is ionized by a high-frequency glow discharge and accelerated by a DC electric filed, has a high contact property with the colour filter and sufficiently low resistivity, and that a colour electrooptical device using that transparent electrode has a good display quality and reliability.

A high-frequency ion plating apparatus is disclosed in detail in the article "High-Frequency Ion Plating Apparatus" on page 687 of Vol. 43 of APPLIED PHYSICS issued in 1974.

The present invention, as defined by Claim 1, adapts this high-frequency ion plating method, in which an evaporated material is ionized by a high-frequency glow discharge and accelerated by a DC electric field, for providing a transparent electrode on the colour filter layer made of organic polymer.

In this high-frequency ion plating method, the accelerated particles migrate with high energy into the organic polymer of the colour filter layer, so that the transparent electrode film provided by deposition of the particles has strong bonding leading to good contact and can withstand high thermal stresses. In addition to the aforementioned action, the substrate according to the high-frequency ion plating method can be freed from any unnecessary impact from charged particles to minimise defects in the ITO film. As a result, it seems that a homogeneous film can be easily achieved thus realising low resistivity.

Embodiments of the present invention will be described in the following with reference to the accompanying drawings of which:
Fig. 1 shows a sectional view of an embodiment of an electrooptical device according to the present invention;
Fig. 2 shows a sectional view of another embodiment of an electrooptical device according to the present invention;
Fig. 3 shows a sectional view of an electrooptical device according to a prior art manufacturing method; and
Fig. 4 shows a high-frequency ion plating apparatus used for providing a transparent electrode film on a colour filter layer of the present invention.

Fig. 1 is a section showing a colour electrooptical device according to a preferred embodiment of the present invention. Reference numeral 1 designates a substrate made of glass, and numeral 2 is an indium-tin oxide ITO electrode formed over the substrate 1. A colour filter 3 is formed over the ITO electrode 2 by applying a voltage to the ITO electrode in an electrodepositing solution, which is prepared by dispersing a polyester-melamine resin and a colouring material in water, to deposit the colour filter 3 on the ITO electrode 2. The method of forming the colour filter by electrodeposition is disclosed in detail in Japanese Patent Publication No. 59446/1990. Reference numeral 4 designates a second electrode which is formed over the colour filter 3 by high-frequency ion plating. Numeral 5 designates an opposed substrate which is made of glass and formed thereover with an ITO electrode 6. Thus, the colour electrooptical device is constructed by placing the substrate 1 and the substrate 5 opposite to each other thereby sandwiching a liquid crystal 7 therebetween.

This device is manufactured in the following manner:
(1) An ITO film is deposited on the substrate 1 and is formed into a predetermined shape by photolithography to prepare the ITO electrode 2.
(2) Next, a voltage is applied to the ITO electrode 2 when placed in an electrodepositing solution comprising polyester-melamine resin and colouring material dispersed in water, to form the colour filter (which has a heat resistance of about 250°C).
(3) Next, ITO is deposited by high-frequency ion plating on the substrate which is formed with the colour filter, to form the second electrode over the colour filter having a predetermined shape by use of photolithography.
(4) The opposed faces of the substrate 5 formed with the ITO electrode 6 and the aforementioned substrate 1 are oriented to sandwich the liquid crystal 7 therebetween. Thus manufacturing the display device as shown in Fig. 1.

Incidentally, the aforementioned manufacturing steps (1) and (2) are necessary when an electrodeposited colour filter is used. However, if the colour filter is formed by dyeing or printing, then the step (1) is dispensable and the colour filter is formed over the substrate 1 by dyeing or printing at step (2).

Next, one example of high-frequency ion plating for forming the ITO over the colour filter 3 will be described in the following.

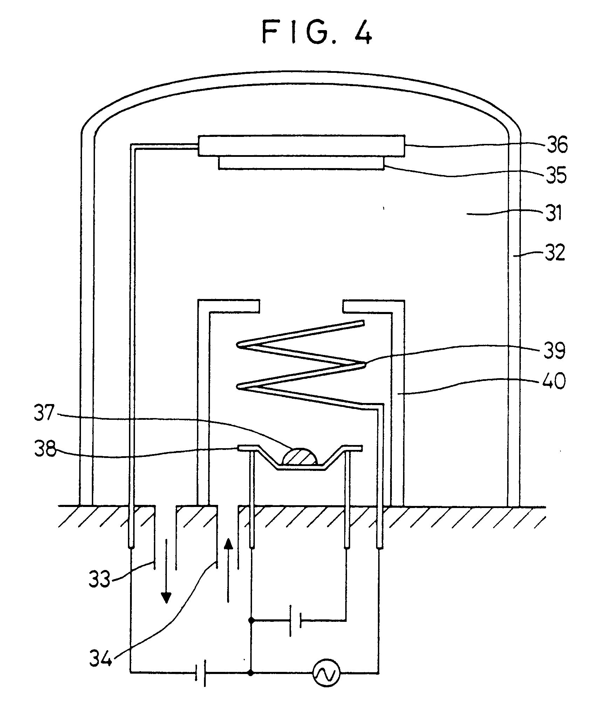

Fig. 4 is a section showing one example of an apparatus using this high-frequency ion plating method. In the Figure, vacuum chamber 31 is held air-tight by a bell jar 32. The vacuum chamber 31 is evacuated by an evacuation line 33 including a vacuum pump. The bell jar 32 is equipped with a gas inlet 34. When forming the transparent conductive film, first the inside of the bell jar 32 is evacuated through the evacuation line 33 and then oxygen gas is fed through the gas inlet 34. This oxygen gas has its partial pressure regulated to about 7.5 x 10⁻⁸ to x 10⁻⁵ Nm², 10⁻⁵ to 10⁻² Torrs. The present embodiment is exemplified by a pressure of 7.5 x 10⁻⁶ Nm², 1 x 10⁻³ Torrs.

The bell jar 32 is equipped therein with: a substrate unit including a substrate 35 having a colour filter and a holder 36; an evaporation substrate 37 comprising 5% tin oxide and 95% indium oxide for forming the film; a heating boat 38 for heating and evaporating the evaporation substance 37; a high-frequency coil 39 for ionizing the evaporated particles by high-frequency excitation; and a shield 40. Moreover, a DC electric field can be applied to the holder 36 and the heating boat 38.

The particles are evaporated from the evaporation substance 37 by heating and migrate in the bell jar. While passing through the high-frequency coil, the particles are ionized in the high-frequency excitation area which is formed in the shield 40. The ionized particles are accelerated to impinge and deposit upon the substrate face to form a cover film by the action of the electric field, which is applied to the substrate 35 or the holder 36. At this time, the substrate can be heated to enhance the depositability. For the ion plating operation, an inert gas such as argon or helium may be dispersed together with the oxygen gas in the bell jar. Moreover, an auxiliary electrode can be disposed in the bell jar to correct the distribution of the electric field thereby to achieve higher film characteristics.

In the present embodiment, the substrate was heated to 200°C by applying high-frequency waves of 13.56 MHz to the high-frequency coil to form a transparent conductive film of ITO having a thickness of 0.6 x 10⁻⁶ m, a transmissivity of 85% and a surface resistance of 8 to 10 Ω/m².

In the electrooptical device thus manufactured according to the present embodiment, the ITO electrode over the colour filter has excellent contact but no separation or cracking when filming and has no resistance change, even if heated subsequently at 200°C for 5 hours, and sufficient contact is maintained. Since the ITO electrode is thin and has a low resistance, moreover, the colour liquid crystal electrooptical device using the ITO electrode has excellent display qualities and can be driven at low voltage, even after being driven at 80°C for 2,000 hours, without any deterioration in the electrode over the colour filter.

Fig. 2 is a section showing another embodiment of the multi-colour display device according to the present invention. Reference numeral 11 designates a substrate made of glass, and numeral 12 designates an ITO transparent electrode, which is formed thereover by an electrodeposition with a colour filter 13 made of an acrylic-melamine resin and a colouring material. Numeral 14 designates an overcoat layer which is made of an acrylic-epoxy resin for smoothing the roughness of the surface of the substrate 11 and protecting the colour filter. Numeral 15 designates a second transparent electrode which is made of ITO and formed by high-frequency ion plating like in Embodiment 1. Numeral 16 designates an opposed substrate which is made of glass. After having been formed thereover with an ITO transparent electrode 17, the opposed substrate 16 is opposed to the substrate 11, and a liquid crystal 18 is sandwiched between the two substrates to form the colour liquid crystal electrooptical device. This electrooptical device can achieve effects similar to that of the preferred embodiment.

This embodiment is exemplified by preparing the colour filter 13 of Fig. 2 by dyeing, in which photosensitive gelatin was patterned by photolithography and dyed. In this case, the ITO electrode 12 is dispensable. Then, the overcoat layer 14 was formed of a polyimide resin containing a silicone compound to manufacture a multi-colour liquid crystal display device as in the previous embodiment, to provide similar effects.

In contrast, the ITO electrode 24 over the filter of Fig. 3 was subjected to a DC sputtering at a substance temperature of 200°C by using an indium-tin oxide as a target. Immediately after filming, the electrode was cracked thereover so that sufficient contact could not be obtained.

As has been specifically described in connection with the embodiments, the process for manufacturing the colour electrooptical device according to the present invention is enabled, by forming the transparent electrode over the colour filter by high-frequency ion plating, to remarkably improve contact with the colour filter made of an organic polymer and improve heat reliability. Moreover, it is possible to stably manufacture the colour electrooptical device having a thin film and an electrode of low resistance capable of being driven at low-voltages by having excellent covering characterisitics.

## Claims

1. A method of manufacturing a colour filter on a substrate comprising;
forming a colour filter (3, 13) made of an organic polymer over a substrate (1, 11); and
forming a transparent conductive film (4, 15) on the colour filter, characterised by
forming said transparent conductive film by high frequency ion plating which comprises:
evaporating a material (37);
ionising said evaporated material by a high frequency glow discharge (39);
accelerating said ionised material by a DC electric field in a low pressure chamber (32); and
depositing said ionised material on said colour filter (3,13).

2. A method of manufacturing a colour filter on a substrate as claimed in claim 1, further comprising heating said substrate to a temperature of less than 250°C during deposition of said ionised material.

3. A method of manufacturing a colour filter on a substrate according to claim 1 or 2;
wherein the colour filter (3,13) comprises a set material of a polyester resin and a melamine resin, or a set material of an acrylic resin and a melamine resin.

4. A method of manufacturing a colour filter on a substrate according to any one of claims 1 to 3; wherein the transparent conductive film (4, 15) is made of an indium-tin oxide.

5. A method of manufacturing a colour electrooptical device (7, 18) comprising;
manufacturing a colour filter on a substrate as claimed in any one of the preceding claims and
forming an opposed substrate (5, 16) by keeping a predetermined gap with the substrate (1, 11) and filling liquid crystal material into the gap.

## Patentansprüche

1. Verfahren zur Herstellung eines Farbfilters auf einem Substrat, umfassend:
das Bilden eines Farbfilters (3, 13), welches aus einem organischen Polymer besteht, auf einem Substrat (1, 11); und
das Bilden eines transparenten leitfähigen Films (4, 15) auf dem Farbfilter,
gekennzeichnet durch
das Bilden des transparenten leitfähigen Films durch Hochfrequenz-Ionenbeschichtung, welche umfaßt:
das Verdampfen eines Materials (37);
das Ionisieren des verdampften Materials durch eine Hochfrequenz-Glühentladung (39);
das Beschleunigen des ionisierten Materials durch ein elektrisches Gleichstromfeld in einer Niederdruckkammer (32); und
das Ablagern des ionisierten Materials auf dem Farbfilter (3, 13).

2. Verfahren zur Herstellung eines Farbfilters auf einem Substrat nach Anspruch 1, ferner umfassend das Erhitzen des Substrats auf eine Temperatur von weniger als 250°C während des Ablagerns des ionisierten Materials.

3. Verfahren zur Herstellung eines Farbfilters auf einem Substrat nach Anspruch 1 oder 2, worin das Farbfilter (3, 13) ein ausgehärtetes Material aus einem Polyesterharz und einem Melaminharz umfaßt oder ein ausgehärtetes Material aus einem Acrylharz und einem Melaminharz umfaßt.

4. Verfahren zur Herstellung eines Farbfilters auf einem Substrat nach einem der Ansprüche 1 bis 3, worin der transparente leitfähige Film (4, 15) aus einem Indiumzinnoxid hergestellt ist.

5. Verfahren zur Herstellung einer Farb-elektrooptischen Vorrichtung (7, 18), umfassend:
das Herstellen eines Farbfilters auf einem Substrat nach einem der vorhergehenden Ansprüche, und
das Bilden eines gegenüberliegenden Substrats (5, 16) durch Halten eines vorbestimmten Zwischenraums zu dem Substrat (1, 11) und das Einfüllen eines Flüssigkristallmaterials in den Zwischenraum.

## Revendications

1. Procédé de fabrication d'un filtre couleur sur un substrat comprenant les étapes qui consistent à :
former un filtre (3,13) couleur en un polymère organique sur le dessus d'un substrat (1,11) et
former une pellicule (4,15) conductrice transparente sur le filtre couleur, caractérisé par le fait de former la pellicule conductrice transparente par plaquage ionique haute fréquence qui consiste :
à faire évaporer un matériau (37);
à ioniser le matériau évaporé par une décharge (39) à incandescence haute fréquence;
à accélérer le matériau ionisé par un champ électrique continu dans une chambre (32) à basse pression; et
à déposer le matériau ionisé sur le filtre (3,13) couleur.

2. Procédé de fabrication d'un filtre couleur sur un substrat suivant la revendication 1, comprenant en outre l'étape qui consiste à chauffer le substrat à une température inférieure à 250°C pendant l'étape de dépôt de matériau ionisé.

3. Procédé de fabrication d'un filtre couleur sur un substrat suivant la revendication 1 ou 2, dans lequel le filtre (3,13) couleur comporte un matériau composé d'une résine polyester et d'une résine mélamine, ou un matériau composé d'une résine acrylique et d'une résine mélamine.

4. Procédé de fabrication d'un filtre couleur sur un substrat suivant l'une des revendications 1 à 3, dans lequel la pellicule (4,15) conductrice transparente est en un oxyde d'étain- indium.

5. Procédé de fabrication d'un dispositif (7,18) électro-optique couleur comportant les étapes de :
fabrication d'un filtre couleur sur un substrat suivant l'une quelconque des revendications précédentes et de
formation d'un contre-substrat (5,16) en conservant un intervalle donné à l'avance vis-à-vis du substrat et en remplissant l'intervalle d'un matériau de cristal liquide.
